# EUROPEAN PATENT APPLICATION

(11) **EP 0 860 663 A2**
(43) Date of publication of application: **26.08.1998**
(21) Application number: 98200456.6
(22) Date of filing: 13.02.1998
(51) Int. Cl.: F24D 3/12, F24D 13/02

(54) **Heat exchange frame for heating and/or cooling rooms**

(30) Priority: 24.02.1997 IT MI970387
(71) Applicant: Zdunich, Giovanni Sergio, 20052 Monza (Milano) (IT)
(72) Inventor: Zdunich, Giovanni Sergio, 20052 Monza (Milano) (IT)
(74) Representative: Mittler, Enrico

(57) **Abstract**

A window or door frame for rooms, particularly for dwellings or offices, equipped with a heat exchanger (100, 101) built directly into the frame.

## Description

This invention concerns a heat exchange frame for heating and/or cooling rooms, especially homes and offices.

The heat exchangers normally available in the rooms of an apartment or an office may be of two kinds: fixed or mobile.

The fixed heat exchangers are generally hung on a wall, for example near the window or door frames; the mobile heat exchangers are generally installed in a room by hanging them on a wall or leaving them in a mobile form on the floor, for the length of time their use is demanded by the outside weather conditions.

In both cases, however, whatever the type of heat exchanger employed, they are bulky and deprive the room of space.

In view of the state of technology described, the scope of this invention is to achieve a different placement of the heat exchangers, free of the shortcomings listed above.

In agreement with this invention, this scope is achieved by a window or door frame for rooms, especially for apartment and offices, characterised by comprising a heat exchanger directly built into the frame.

Said heat exchanger is preferably placed in the lower part of the frame.

Thanks to to this invention a heat exchanger is set into a room without occupying extra space, thus maintaning heat comfort and enhancing aesthetics.

These and other features and advantages of this invention will be made more apparent by the following detailed description of a few of its embodiments, shown as non-limiting examples in the enclosed drawings, in which:
- Figure 1 is a front view of the room inner side of an outward facing frame with a built-in heat exchanger according to a first embodiment of the invention;
- Figure 2 is a front view of the room outer side of the frame of Figure 1;
- Figure 3 is cross section along the plane III-III of the frame of Figure 1;
- Figure 4 is a cross section along the plane IV-IV of the frame of Figure 1;
- Figure 5 shows a rotating hydraulic joint for connecting the heat exchanger, built into the frame, to a central air conditioning system;
- Figure 6 is a front view of the room inner side of a frame with a built-in heat exchanger according to another embodiment of the invention;
- Figure 7 is a cross-section along the plane VII-VII of the frame of Figure 6;
- Figure 8 is cross-section along the plane VIII-VIII of the frame of Figure 6.

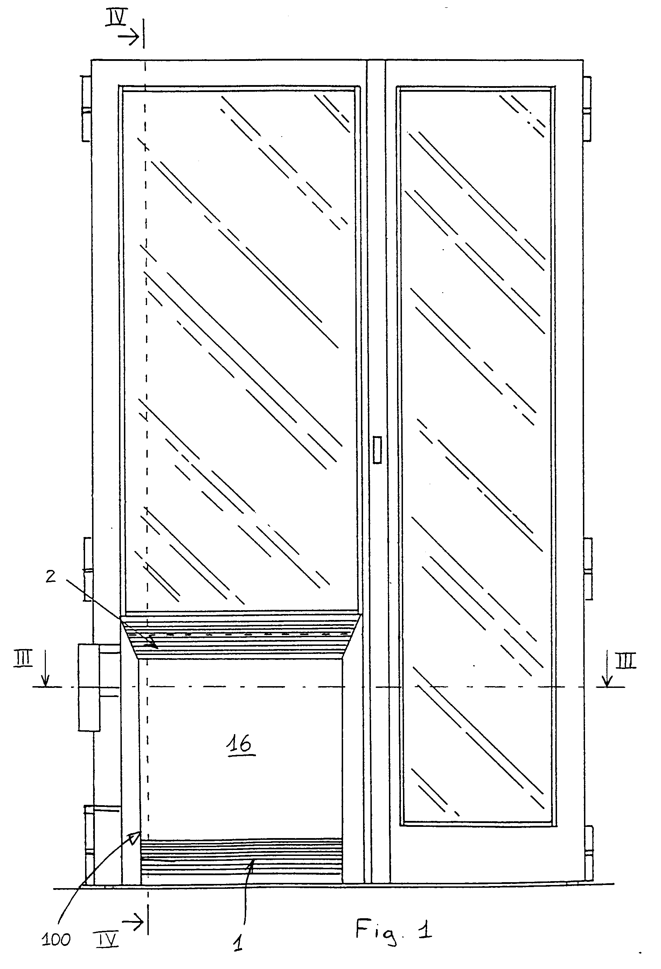

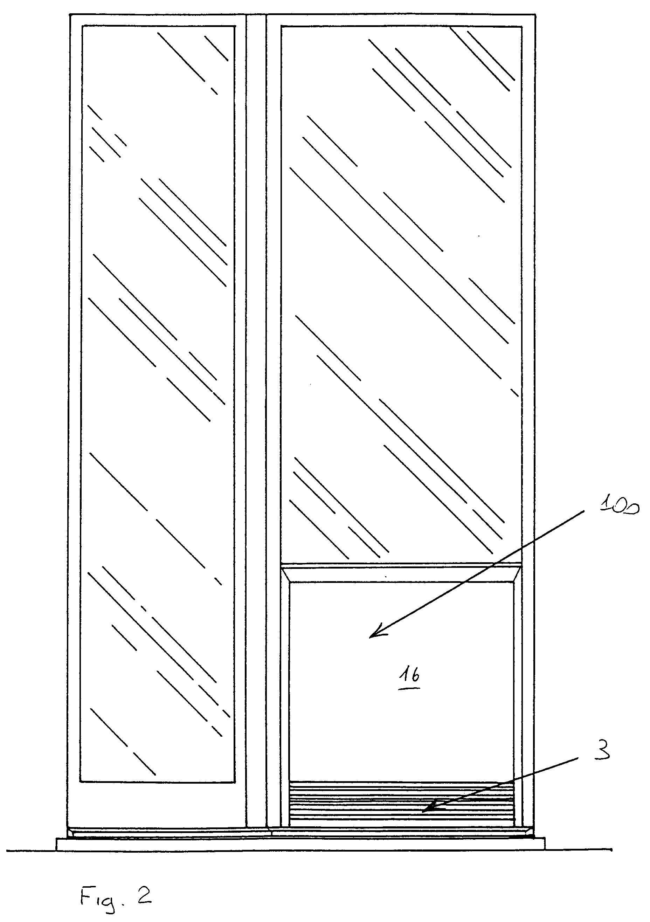

Figures 1 - 4 show an outward facing frame consisting of a two-pane door window. The lower part of one of these panes holds a built-in heat exchanger 100. This heat exchanger 100 includes a boxy housing 16 equipped with three grids 1, 2 and 3: two grids, 1 and 2, placed inside the room, are such as to allow the room air to enter the heat exchanger 100 to be heated and/or cooled, and one outer grid 3 is such as to draw air from the outside.

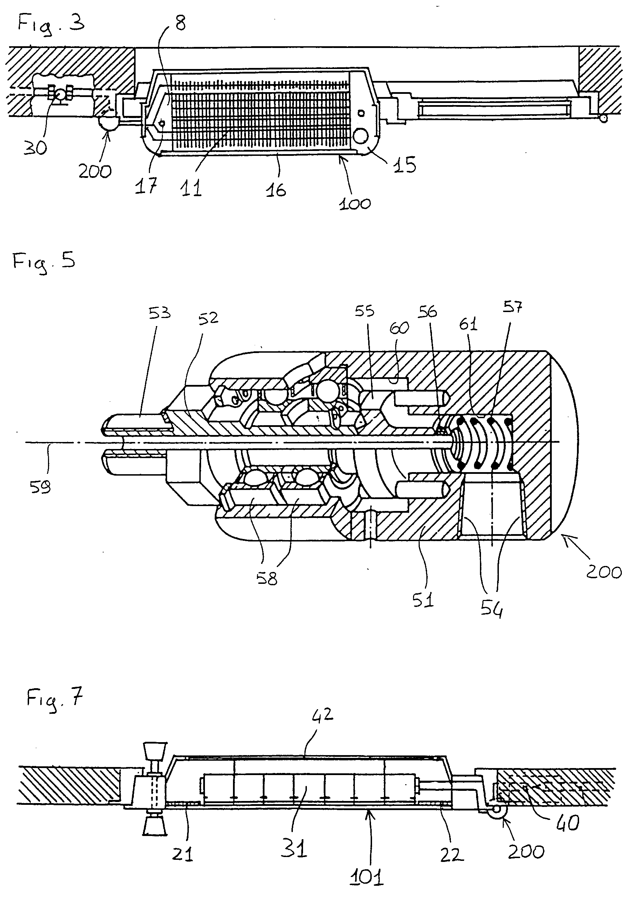

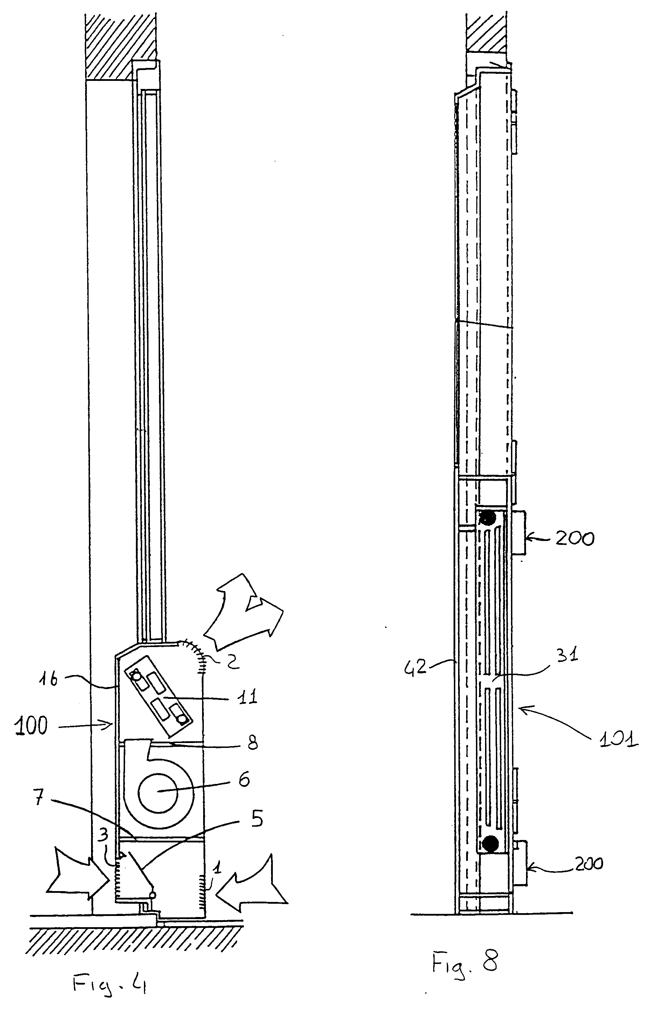

Figure 3 shows a section of the frame of Figure 1, comprising the heat exchanger 100, along a plane III-III parallel to the floor. In particular, this shows, inside the housing 16, a finned radiator 11 capable of exchanging heat with a crossflow of air and a control panel 15 to adjust the air temperature and flowrate exiting the heat exchanger.

Figure 4 shows a section of the frame of Figure 1, comprising the heat exchanger 100 along a plane IV-IV, in which the elements composing the heat exchanger are schematically represented. In particular, the heat exchanger comprises, in addition to the grids 1, 2 and 3, a mobile shutter 5 to allow an exchange with outside air.

The air coming from the grids 1 and 3 crosses a filter 7 and reaches an electrical fan 6 which adjusts the flowrate. The flow then crosses a finned radiator while exchanging heat with the same, and exits across the grid 2, diffusing in the ambient.

When the room air is to be cooled, the air enters the heat exchanger 100 through the grid 1, crosses the filter 7, then the electrical fan 6 and reaches the radiator 11. In contact with the radiator 11 the air condenses on the same and drips off. A collection basin is provided for the condensate (Figure 4), fitted with a discharge hole 17 which is suitably connected to a means for removing the collected condensate.

The radiator heating and/or cooling can be achieved directly inside the heat exchanger, for instance with the aid of an electrical air conditioning system or by exploiting a centralized heating (or cooling) system common to the entire apartment or office or all the apartments and offices of the same building.

In the latter case, the pipes originating from the heating and/or cooling system must be connected to the radiator 11 fitted inside the frame, by using the appropriate fittings to be described below.

To allow the opening of the frame the connection must guarantee a hydraulic seal, while at the same time allowing a relative rotation of its connected parts.

Rotating joints 200 as shown in the cross section of Figure 5 are used for this purpose.

The rotating joint 200 essentially comprises a first cylindrical body 51 and a second cylindrical body 52. The extremity of the first cylindrical body 51 forms a cavity 60 to hold the second internally hollow cylindrical body 52 and a second cavity 61. The extremity of this second cavity 61 is fitted with a threaded hole 54 with an axis transversal to the axis 59 of the cylindrical body 51, on which the terminal part of a pipe for connection with the radiator 11 is to be screwed.

The extremity of the second cylindrical body 52 protruding from the body 51 is fitted with an externally threaded cylindrical section 53, suitable for a threaded connection to a corresponding pipe for connection with the heating and/cooling system.

The relative rotation between the cylindrical bodies 51 and 52 around the axis 59 is achieved through a pair of roller bearings 58.

The hydraulic seal is on the other hand guaranteed by the elements 55, 56 and 57. The element 55 is an essentially cylindrical and internally hollow front seal slipped inside the cavity 61 formed in the cylindrical body 51. Said element 55 is pushed against the cylindrical body 52 by a spring 57. The surfaces of the two elements 52, 55 in contact with each other are flat and ensure a seal between the cylindrical body 52 and the element 55 by the presence of a thin film of the liquid to be sealed off. On the other hand, the seal between the element 55 and the cylindrical body 51 is formed by a gasket 56, generally known as "O-ring gasket", mounted on a cylindrical section of the element 55 inside the cavity 61.

This achieves a hydraulic seal between the two rotating cylindrical bodies 51 and 52.

Moreover, Figure 3 shows a safety valve 30, fitted in a wall of the room, that shuts off the flow of the heating and/or cooling fluid in case of malfunctions of the heat exchanger 100.

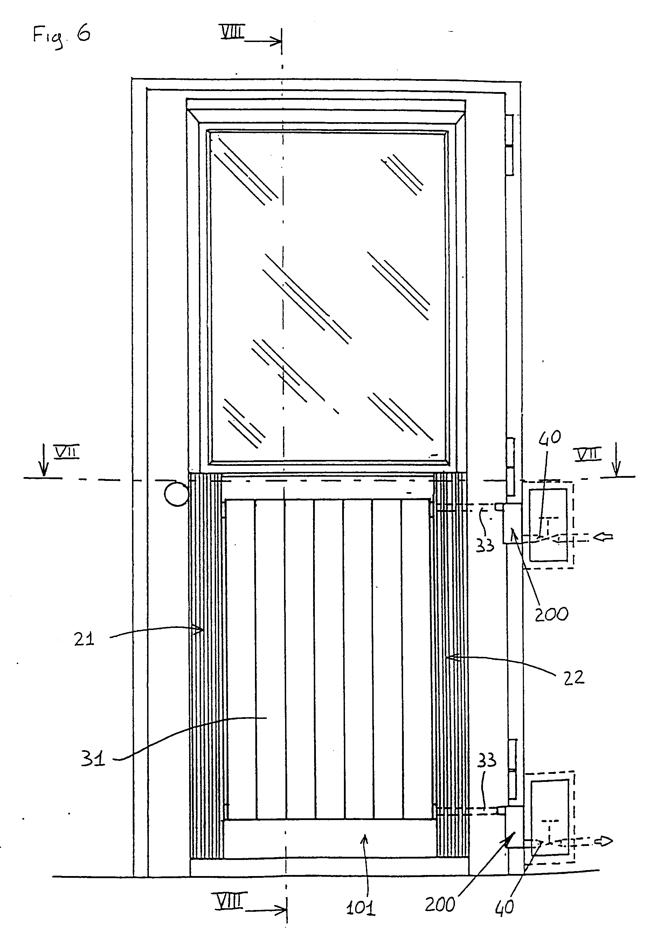

Figure 6 - 8 show a second embodiment of the invention.

Figure 6 is a front view of a single-pane frame with a heat exchanger 101 built into its lower part. In particular the heat exchanger 101 consists of a radiator 31 of a radiating plate type, visible from the front but closed off in the rear by a protective wall 42 and laterally flanked by two aesthetic grids 21 and 22, which can eventually be extended even in front of the radiator 31, thus allowing the heat exchanging air to enter and exit.

With reference to the Figures 6 - 8, the radiator 31 is connected to a central heating system by two tubes 33, one coming and one going, and two corresponding rotating joints 200.

Moreover, two safety valves 40 are present which adjust the heating fluid flow depending on the requirements, and shut it off in case of any malfunction of the heat exchanger 101.

## Claims

1. A frame for rooms, in particular for dwellings or offices, characterised by comprising a heat exchanger (100, 101) directly built into the frame.

2. A frame according to claim 1, characterised by comprising a radiator (11, 31) crossed by a heating and/or cooling fluid.

3. A frame according to claim 2, characterised in that said radiator (11, 31) is hydraulically connected to a heating and/or cooling system.

4. A frame according to claim 3, characterised in that the connection to the said heating and/or cooling system is achieved by rotating joints (200).

5. A frame according to claim 2, characterised in that the said radiator is connected to an electrical heating system.

6. A frame according to any of the claims from 2 to 5, characterised in that said radiator is placed inside a boxy housing (16) fitted with a first set of openings (1, 2) to admit room air to said radiator (11) and expel air from the radiator to the ambient.

7. A frame according to claim 6, characterised in that it comprises means for a forced ventilation (6) to activate said air inflow and outflow.

8. A frame according to claims 6 and 7, characterised in that said boxy housing (16) comprises a second set of openings (3) to allow an inflow of air from outside the room.

9. A frame according to claim 8, characterised in that said heat exchanger comprises means for the selective closing (5) of said second set of openings (3).

10. A frame according to any of the claims from 1 to 9, characterised in that said heat exchanger comprises filtering means (7) for the air.

11. A frame according to any of the claims from 1 to 10, characterised in that said heat exchanger comprises means for collecting (8) and discharging (17) the condensate.

12. A frame according to any of the claims from 2 to 5, characterised in that said radiator (31) is of a radiating plate type, externally closed off by a protective wall (42).

13. A frame according to any of the claims from 1 to 12, characterised in that said heat exchanger (100, 101) is placed in the lower part of the frame.
